# EUROPEAN PATENT SPECIFICATION

(11) **EP 3 583 852 B1**
(45) Date of publication and mention of the grant of the patent: **16.12.2020**
(21) Application number: 19180807.0
(22) Date of filing: 18.06.2019
(51) Int. Cl.: A21B 1/24, A21B 1/36, A21B 1/48, A23L 5/10, A23L 7/10

(54) **COOKING MACHINE FOR FOOD PRODUCTS**
KOCHMASCHINE FÜR NAHRUNGSMITTEL
MACHINE DE CUISSON POUR PRODUITS ALIMENTAIRES

(30) Priority: 19.06.2018 IT 201800006441
(43) Date of publication of application: 25.12.2019
(73) Proprietor: Fava S.p.A., 44042 Cento (FE) (IT)
(72) Inventor: FAVA, Enrico, 44042 CENTO (FE) (IT)
(74) Representative: Di Gennaro, Sergio

(56) References cited:
- CN-A- 107 898 304
- US-A- 5 289 759
- US-A- 5 294 452
- US-A- 5 410 951

## Description

The present invention relates to a cooking machine for food products such as products derived from grains, such as pasta, or for cooking semolina pasta for cous cous, stuffed pasta etc.

The type of cooking used is cooking with the aid of steam that is conveyed onto the products.

Such types of cooking machines are described e.g. in the patents US5410951, US5294452,US5289759 or utility model CN107898304.

Machines that allow this type of pre-cooking are machines comprising a conveyor belt on which the food products to be cooked lie. Such belt passes through a container for the steam that is injected from the bottom upwards allowing the controlled cooking of the cous cous or other food products.

The container body is shaped like a kind of elongated tube that contains the conveyor belt on which the product to be treated rests.

Despite the care taken to contain the steam within existing tunnels the performance in terms of cooking efficiency can be improved.

The present invention sets out to realize a machine for steam cooking food products that improves the performance, reducing the amount of heat and steam required for cooking.

These and other objects according to the present invention are reached by realizing a machine for steam cooking food products having the characteristics of the appended claim 1.

Further features of the machine are the subject matter of the dependent claims.

The features and advantages of such machine according to the present invention will be more apparent from the following description of an embodiment, which is to be understood as exemplifying and not limiting, with reference to the schematic drawings attached, wherein:

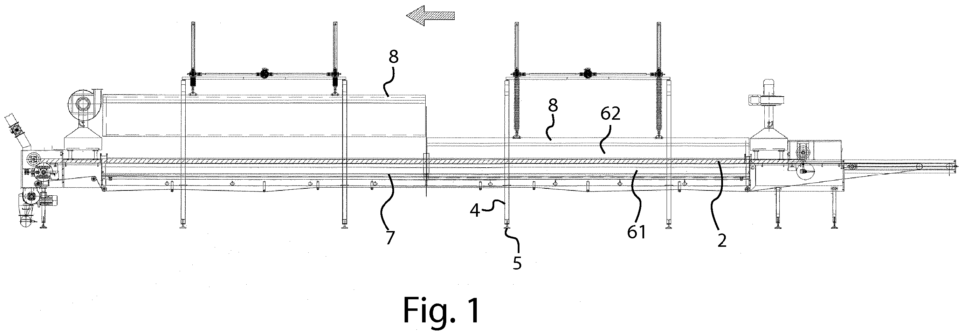

- Figure 1 is a side view of the machine overall without the outer shell;
- Figure 2 is a front view of the machine according to the present invention;
- Figure 3 is a detailed view of the zone O of the machine illustrated in Figure 2.

With reference to the appended figures, it shows the machine for cooking food products such as, for example, cous cous, semolina pasta or other grains, as well as stuffed pasta.

The type of cooking used is cooking with the aid of steam that is conveyed through the products.

The machine essentially comprises a machine body passed through longitudinally by a conveyor belt 2, on which the food products to be cooked lie. This allows the products to enter on an initial side of the machine and to exit from the opposite final side once treated. The machine body comprises an external roof 3 that rests on a base 4, provided with relevant feet 5.

In a lower chamber 61 with respect to such conveyor belt means for generating steam at temperatures preferably comprised between 100 and 120 degrees are provided. Such means comprise tubes 7 appropriately connected with holes of different diameters.

The means for generating steam can be distributed throughout the machine length or even just on the first portion thereof. Pressure is generated in the chamber 61 such as to allow the steam to pass through the conveyor belt from the bottom upwards. In fact, such belt is porous and generally made of net.

A movable upper shell 8 is lowered to cover the conveyor belt so as to isolate the upper chamber 62 wherein the steam comes into contact with the food product to be treated and the lid.

After passing through the food product the steam that still has a very high temperature in all the existing cookers comes towards the upper part of the chamber where it disperses much of its energy away from the product.

According to the invention, to eliminate this dispersion, a containment plane 9 is placed in the upper chamber 61 above the conveyor belt 2 thus covering the food product and forcing steam to remain tangent to the product itself throughout the length of the belt. In this way, all the heat energy contained in the steam is kept in contact with the product to be cooked, thus obtaining a significant increase in efficiency with a consequent reduction of the steam required. Such containment plane can be placed throughout the length of the cooker, so as to cover the whole conveyor belt or only in an initial portion. Furthermore, such plane has an overall width substantially equivalent to that of the belt.

The vertical distance between the conveyor belt with the product positioned thereon (the so-called "cake"), in the case of cous cous, and the containment plane that can be set through adjusting means able to optimize the space between the plane and the product, thus maintaining the hot and wet flow tangent to the product itself.

Advantageously the steam containment surface, the one directly hit by the flow of steam, is formed by a smooth or quilted metal sheet 91. Furthermore, preferably such quilted metal sheet can be heated to increase the performance thereof.

Containment walls 92 are provided at opposite ends of the metal sheet 91 adapted to abut against the plane when the latter is lowered in its lowest working position.

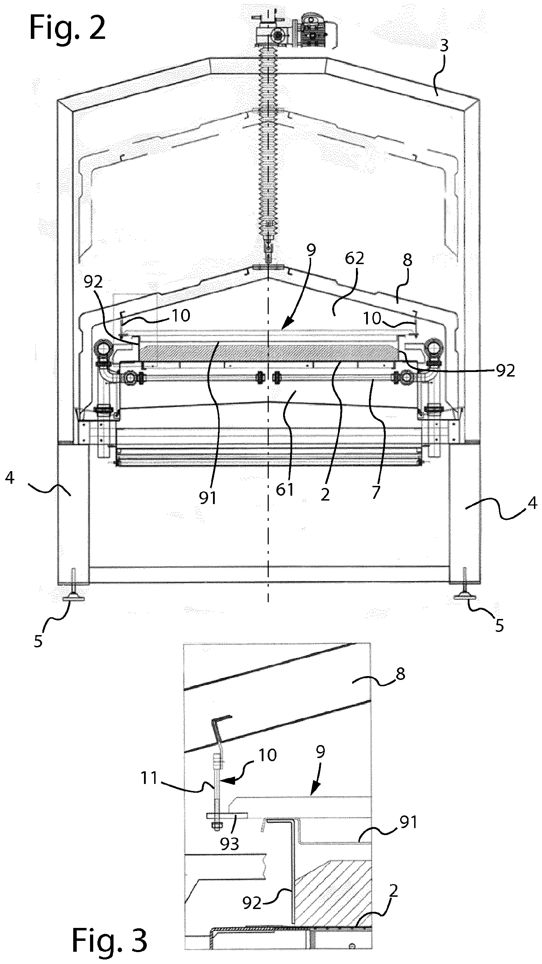

The height adjustment means 10 of the support are illustrated in detail in Figure 3 and comprise a bracket 11 fixed on the movable shell 8 which is bound at the side ends of the plane, in particular to a pair of plates 93, by way of threaded shafts 12 that enable the setting of the height of the plane itself.

This sheet is thus raised together with the lid, leaving the belt free for cleaning and maintenance.

## Claims

1. A machine for cooking food products comprising
a machine body within which there is a conveyor belt (2) passing therethrough on which food products to be cooked are positioned,
a lower chamber (61) with respect to such belt provided with means for generating steam wherein a pressure is generated such as to allow steam to pass through the conveyor belt from the bottom upwards,
an upper chamber (62) with respect to such belt, which is closed by a movable upper shell (8) wherein the steam comes into contact with the food product,
**characterized in that** it comprises
a containment plane (9) placed in the upper chamber (62) above the conveyor belt (2) thus covering the food product and forcing steam to remain tangent to the product throughout the length of the belt.

2. The machine according to claim 1, wherein such plane (9) has an overall width substantially equivalent to the belt one.

3. The machine according to claim 1, wherein such plane (9) is placed at an initial portion of the conveyor belt.

4. The machine according to claim 1, wherein such plane (9) is placed throughout the length of the machine body such as to substantially cover the whole conveyor belt.

5. The machine according to claim 1, wherein steam generating means are spread throughout the machine length or even just on the first portion thereof.

6. The machine according to claim 1, wherein the vertical distance between the conveyor belt with the product positioned thereon and the plane (9) is adjustable by way of adjusting means.

7. The machine according to claim 1, wherein the plane (9) lower surface directly hit by the flow of steam is formed by a quilted metal sheet (91).

8. The machine according to claim 1, wherein such metal sheet (91) can be heated.

9. The machine according to claim 1, wherein containment walls (92) are provided at opposite ends of the metal sheet (91) adapted to abut against the plane (9) when the latter is lowered in its lowest position.

10. The machine according to claim 1, wherein height adjustment means (10) of the support comprise a bracket (11) fixed on the movable shell (9) which is constrained at the side ends of the plane (9) by way of threaded shafts (12) enabling the setting of the support height thereof.

## Patentansprüche

1. Eine Maschine zum Kochen von Lebensmittelprodukten, umfassend
einen Maschinenkörper, in dem sich ein durchlaufendes Förderband (2) befindet, auf dem die zu kochenden Lebensmittelprodukte positioniert werden,
eine bezüglich eines solchen Bandes untere Kammer (61), die mit Mitteln zur Erzeugung von Dampf versehen ist, wobei ein solcher Druck erzeugt wird, dass Dampf durch das Förderband von unten nach oben durchtreten kann,
eine obere Kammer (62) in Bezug auf ein solches Band, die durch eine bewegliche obere Schale (8) verschlossen ist, in welcher der Dampf mit dem Lebensmittelprodukt in Kontakt kommt,
**dadurch gekennzeichnet, dass** sie Folgendes umfasst
eine Eindämmungsebene (9), die in der oberen Kammer (62) oberhalb des Förderbandes (2) angeordnet ist, wodurch das Lebensmittelprodukt abgedeckt wird und der Dampf gezwungen wird, über die gesamte Länge des Bandes tangential zum Produkt zu bleiben.

2. Maschine nach Anspruch 1, wobei eine solche Ebene (9) eine Gesamtbreite hat, die im Wesentlichen der des Bandes entspricht.

3. Die Maschine nach Anspruch 1, wobei eine solche Ebene (9) an einem Anfangsabschnitt des Förderbandes angeordnet ist.

4. Maschine nach Anspruch 1, wobei eine solche Ebene (9) über die gesamte Länge des Maschinenkörpers so angeordnet ist, dass sie im Wesentlichen das gesamte Förderband abdeckt.

5. Maschine nach Anspruch 1, bei der die Dampferzeugungsmittel über die gesamte Länge der Maschine oder sogar nur auf dem ersten Teil davon verteilt sind.

6. Maschine nach Anspruch 1, bei der der vertikale Abstand zwischen dem Förderband mit dem darauf positionierten Produkt und der Ebene (9) mit Hilfe von Einstellmitteln einstellbar ist.

7. Maschine nach Anspruch 1, bei der die untere Fläche der Ebene (9), die direkt vom Dampfstrom getroffen wird, durch ein gestepptes Metallblech (91) gebildet wird.

8. Maschine nach Anspruch 1, wobei ein solches Metallblech (91) erhitzt werden kann.

9. Maschine nach Anspruch 1, bei der an gegenüberliegenden Enden des Metallblechs (91) Rückhaltewände (92) vorgesehen sind, die so ausgebildet sind, dass sie gegen die Ebene (9) stoßen, wenn letztere in ihre niedrigste Position abgesenkt wird.

10. Maschine nach Anspruch 1, bei der die Höheneinstellmittel (10) des Trägers einen an der beweglichen Schale (9) befestigten Bügel (11) umfassen, der an den seitlichen Enden der Ebene (9) mittels Gewindestiften (12) eingespannt ist, welche die Einstellung der Höhe des Trägers ermöglichen.

## Revendications

1. Machine pour la cuisson de produits alimentaires comprenant
un corps de machine à l'intérieur duquel se trouve une bande transporteuse (2) traversant celui-ci, sur laquelle des produits alimentaires à cuire sont positionnés,
une chambre inférieure (61) par rapport à cette bande munie de moyens pour générer de la vapeur, dans laquelle une pression est générée de façon à permettre à la vapeur de traverser la bande transporteuse du bas vers le haut,
une chambre supérieure (62) par rapport à cette bande, qui est fermée par une coque supérieure mobile (8), dans laquelle la vapeur vient en contact avec le produit alimentaire,
**caractérisée en ce qu'**elle comprend
un plan de confinement (9) placé dans la chambre supérieure (62) au-dessus de la bande transporteuse (2) recouvrant ainsi le produit alimentaire et forçant la vapeur à rester tangente au produit sur toute la longueur de la bande.

2. Machine selon la revendication 1, dans laquelle ce plan (9) possède une largeur globale sensiblement équivalente à celle de la bande.

3. Machine selon la revendication 1, dans laquelle ce plan (9) est placé au niveau d'une partie initiale de la bande transporteuse.

4. Machine selon la revendication 1, dans laquelle ce plan (9) est placé sur toute la longueur du corps de machine de façon à sensiblement recouvrir la totalité de la bande transporteuse.

5. Machine selon la revendication 1, dans laquelle les moyens de génération de vapeur sont répartis sur toute la longueur de machine ou même uniquement sur la première partie de celle-ci.

6. Machine selon la revendication 1, dans laquelle la distance verticale entre la bande transporteuse avec le produit positionné sur celle-ci et le plan (9) est ajustable par le biais de moyens d'ajustement.

7. Machine selon la revendication 1, dans laquelle la surface inférieure du plan (9) directement atteinte par le flux de vapeur est formée par une feuille métallique (91) matelassée.

8. Machine selon la revendication 1, dans laquelle cette feuille métallique (91) peut être chauffée.

9. Machine selon la revendication 1, dans laquelle des parois de confinement (92) sont ménagées à des extrémités opposées de la feuille métallique (91) conçues pour venir en butée contre le plan (9) lorsque ce dernier est abaissé dans sa position la plus basse.

10. Machine selon la revendication 1, dans laquelle des moyens d'ajustement en hauteur (10) du support comprennent une potence (11) fixée sur la coque mobile (9) qui est contrainte aux extrémités latérales du plan (9) par le biais d'arbres filetés (12) permettant le réglage de la hauteur de support de celui-ci.
